# EUROPÄISCHE PATENTSCHRIFT

(11) **EP 1 571 366 B1**
(45) Veröffentlichungstag und Bekanntmachung des Hinweises auf die Patenterteilung: **21.03.2007**
(21) Anmeldenummer: 05002235.9
(22) Anmeldetag: 03.02.2005
(51) Int. Cl.: F16F 1/38

(54) **Elastisches Lager**
Elastic support
Support élastique

(30) Priorität: 06.03.2004 DE 102004011069
(43) Veröffentlichungstag der Anmeldung: 07.09.2005
(73) Patentinhaber: Jörn GmbH, 71336 Waiblingen (DE)
(72) Erfinder: Zawadzki, Bernd, 71409 Schwaikheim (DE)
(74) Vertreter: Neubauer, Hans-Jürgen

(56) Entgegenhaltungen:
- DE-U- 7 141 159
- US-A- 5 003 684
- PATENT ABSTRACTS OF JAPAN Bd. 014, Nr. 144 (M-0951), 19. März 1990 (1990-03-19) -& JP 02 008524 A (KINUGAWA RUBBER IND CO LTD), 12. Januar 1990 (1990-01-12)

## Beschreibung

Die Erfindung betrifft ein elastisches Lager nach dem Oberbegriff des Anspruches 1.

Ein bekanntes elastisches Lager (DE 28 16 742 C2, Fig. 7 bis 10) besteht aus einem Elastomermetallteil als Gummimetallteil mit einem inneren Metallteil und aus einem rohrförmigen Lagergehäuse, wobei das innere Metallteil und das Lagergehäuse der Krafteinleitung und Kraftausleitung dienen. Das Gummimetallteil weist eine Außenschale auf, wobei zwischen der Außenschale und dem inneren Metallteil Elastomerkörper als Gummikörper festhaftend angeordnet sind. Der Außendurchmesser des Gummimetallteils ist im Herstellzustand zumindest in Teilbereichen größer als der Innendurchmesser des Lagergehäuses, so dass das Gummimetallteil im fertig montierten Montagezustand unter radialer Vorspannung in das Lagergehäuse eingepresst ist.

Dokument DE 7141159 U offenbart ein elastisches Lager gemäß dem kennzeichenden Teil des Anspruchs 1.

Konkret ist hier das elastische Lager mit einem prismatischen inneren Metallteil und einem zylindrischen Lagergehäuse ausgebildet. Die Elastomerkörper liegen einander gegenüber und am inneren Metallteil sind versetzt zu den Elastomerkörpern Elastomeranschläge festhaftend angeordnet. Die Elastomerkörper und die Elastomeranschläge sind vulkanisierte Gummikörper.

Solche elastischen Lager werden im Fahrzeugbau an unterschiedlichen Lagerstellen, wie beispielsweise als Motorlager, Getriebelager oder Hinterachs-Hilfsträgerlager eingesetzt.

Zudem werden solche elastischen Lager für eine vordere Lagerung eines kippbaren Fahrerhauses eines Lastkraftwagens eingesetzt. Dabei liegt die Lagerachse etwa horizontal und in einer axialen Bohrung des inneren Metallteils ist ein Kunststoffrohr montiert. In das Kunststoffrohr ist die Lagerachse eingesteckt um das Gleiten für den Kippvorgang des Fahrerhauses zu ermöglichen. Die Elastomerkörper sind im eingepressten jedoch statisch unbelasteten Zustand so angestellt und dimensioniert, dass die Achse des inneren Metallteils nach der statischen Belastung mit dem Fahrerhaus etwa mit der Gehäuseachse zusammenfällt, so dass nach unten und oben ein etwa gleicher Auslenkungsweg zur Verfügung steht. Das bekannte elastische Gelenklager weist im Herstellzustand zwei zylindrisch geformte Außenhalbschalen auf, welche einen Außenradius entsprechend dem Innenradius des Lagergehäuses aufweisen und jeweils durch Längsspalte, welche versetzt zu den Gummikörpern liegen, voneinander beabstandet sind. Beim Einpressen des Gummimetallteils in das Lagergehäuse werden durch radiale Vorspannung der Elastomerkörper die beiden Außenhalbschalen so zusammengeführt, dass die Längsspalte geschlossen werden und deren Spaltränder aneinander liegen sowie in den zwischen den Elastomerkörpern aneinanderliegenden Außenschalenteilbereichen eine radial nach außen wirkende Vorspannung zur Gehäuseanlagefläche hin aufgebaut wird.

Es sind auch Modifikationen zu dem vorstehend erläuterten elastischen Lager bekannt, bei denen insbesondere bei Fahrerhauslagern nur der untere Außenschalenteilbereich nach dem Einpressen des Gummimetallteils durch Aneinanderliegen der Ränder der beiden Außenhalbschalen geschlossen wird, gegenüber liegend dazu bleiben die Außenhalbschalen auch im eingepressten Montagezustand mit einem weiten Längsspalt offen. Wesentlich für eine gute Lagerfunktion ist es auch bei dieser Ausführungsform, dass im unteren Außenschalenteilbereich zwischen den Elastomerkörpern die Außenhalbschalen im eingepressten Montagezustand mit einer Randanlage und unter Vorspannung geschlossen sind.

Durch die radiale Vorspannung dieses Gelenklagers mit geteilten, an Rändern unter Vorspannung aneinander liegenden Außenschalenteilen besteht die Gefahr, dass das Gummimetallteil bei Lagerbewegungen axial auswandert, was insbesondere durch kleine Relativabstützbewegungen zwischen den aneinander liegenden Außenschalenrändern bei wechselnden Lagerbelastungsrichtungen auftreten kann. Entsprechend besteht auch die Gefahr, dass sich das Gummimetallteil im Lagergehäuse aus der vorgegebenen Solllage verdreht oder dass die Randkanten übereinander geführt werden.

Um solche unzulässigen Verlagerungen des Gummimetallteils im Lagergehäuse zu verhindern, sind regelmäßig zusätzliche Sicherungsmaßnahmen erforderlich. Bekannte Sicherungsmaßnahmen bestehen aus stirnseitig am Lagergehäuse verschraubten und radial in den Bereich des eingepressten Gummimetallteils vorstehenden Axialsicherungselementen, welche durch Schrauben oder Umbördeln fixiert sind und beispielsweise auch Bestandteile der Außenhalbschalen sein können.

Aufgabe der Erfindung ist es, ein gattungsgemäßes elastisches Lager so weiterzubilden, dass bei einfachem Lageraufbau die Gefahr einer betriebsmäßigen Verlagerung des Elastomermetallteils im Lagergehäuse aus einer vorgegebenen Sollposition verringert wird.

Diese Aufgabe wird mit den Merkmalen des Anspruchs 1 gelöst.

Gemäß Anspruch 1 ist wenigstens ein Außenschalenteilbereich zwischen den Elastomerkörpern durchgehen geschlossen ausgebildet. Dieser Außenschalenteilbereich ist im Herstellzustand des Elastomermetallteils mit einer flacheren Auswölbung im Vergleich zur Innenwölbung des zugeordneten Lagergehäuseteilbereichs ausgebildet dergestalt, dass im eingepressten Montagezustand bei aufgebrachter Vorspannung die Anbindungsstellen des Außenschalenteilbereichs an den Elastomerkörpern so relativ aufeinander zu verlagert sind, dass damit der Außenschalenteilbereich im Vergleich zum Herstellzustand weiter ausgewölbt ist und unter Vorspannung angepasst an die Innenwölbung am zugeordneten Lagergehäuseteilbereich anliegt.

Damit wird vorteilhaft einerseits die für eine gute Lagerfunktion erforderliche radiale Vorspannung bei der Anlage des Außenschalenteilbereichs zum zugeordneten Lagergehäuseteilbereich hin aufgebracht. Andererseits liegt aber keine Teilung in diesem Außenschalenteilbereich wie im Stand der Technik vor, so dass im eingepressten Montagezustand unter Vorspannung aneinander liegende Außenschalenlängsränder vermieden werden, welche bei den vorbekannten Ausführungen bei wechselnden Belastungsrichtungen über wechselnde Abstützkräfte und kleinere Relativbewegungen ein axiales Auswandern und Verdrehen des Elastomermetallteils im Lagergehäuse aus einer Soll-Position begünstigen. Auch ein fehlerhaftes Überlappen der Außenschalenränder, welches auch bei einem unfachmännischen Einpressvorgang erfolgen kann, ist bei dem erfindungsgemäß geschlossenen Außenschalenteilbereich nicht mehr möglich. Aufgrund dieser verbesserten Lagestabilisierung des Elastomermetallteils im Lagergehäuse kann in der Regel auf zusätzliche Sicherungsmaßnahmen zur Verhinderung von axialen Auswanderbewegungen oder Verdrehungen verzichtet werden, so dass die Herstellung und Montage des erfindungsgemäßen elastischen Lagers insgesamt einfach und kostengünstig sind.

Gemäß Anspruch 2 kann je nach den Gegebenheiten und dem konkreten Einsatz eines elastischen Lagers nur ein Außenschalenteilbereich zwischen den gegenüberliegenden Elastomerkörpern durchgehend geschlossen sein, wobei der gegenüberliegende Außenschalenteilbereich auch im eingepressten Montagezustand ohne aneinanderliegender Außenschalenränder weit offen verbleibt. Eine solche Ausführungsform mit im Einbauzustand horizontaler Lagerachse kann vorzugsweise als Fahrerhauslager für einen Lastkraftwagen eingesetzt werden, wobei der geschlossene Außenschalenteilbereich dann im unteren Lagerbereich liegt. Für die Außenschale ist hier somit nur ein einziges Schalenteil, insbesondere ein Blechteil, erforderlich, was zu günstigen Herstellungskosten führt.

Bei einem horizontalen Einbau des elastischen Lagers nach Anspruch 3, insbesondere als Fahrerhauslager sollen die Elastomerkörper etwa in einer Horizontalebene gegenüberliegen und an etwa vertikal ausgerichteten Stützflächen des inneren Metallteils angehaftet und abgestützt sein dergestalt, dass im statisch belasteten Zustand die Längsmitte des inneren Metallteils etwa im Bereich der Lagerachse liegt. Nach Anspruch 4 kann dazu das innere Metallteil in an sich bekannter Weise prismatisch ausgeführt sein und eine lagerachsparallele Bohrung zur Aufnahme einer Befestigungsschraube und/oder zur Aufnahme eines Lagerrohrs und eines Achsteils für die Realisierung einer Kippachse aufweisen.

In einer bevorzugten Ausführungsform nach Anspruch 5 ist das Lagergehäuse kreiszylindrisch ausgeführt, wobei die Außenschalenform im Bereich der Elastomerkörper entsprechend einem Zylinderabschnitt ausgebildet ist. Der geschlossene Außenschalenteilbereich hat dabei im Herstellzustand des Elastomermetallteils eine geringere Auswölbung als die durch den Radius des zylindrischen Lagergehäuses vorgegebene Auswölbung. Erst beim Einpressen des Elastomermetallteils in das Lagergehäuse wird dann der Außenschalenteilbereich unter Vorspannung entsprechend zylindrisch weiter ausgewölbt und gegen die zylindrische Anlagefläche des Lagergehäuses gepresst.

Grundsätzlich ist die erfindungsgemäße Idee nicht auf zylindrische Lagergehäuse beschränkt, sondern kann beispielsweise je nach den Gegebenheiten auch bei einem elyptisch geformten Lagergehäuse verwendet werden.

Nach Anspruch 6 können an sich bekannte Elastomeranschläge verwendet werden.

Die Außenschale kann nach Anspruch 7 vorzugsweise aus einem Außenmetallblech gebildet sein, welches im Bereich der Elastomerkörper auch innerhalb dieser verlaufen kann. Für gewichtsgünstigere Ausführungsformen kann auch eine Außenschale aus Kunststoff verwendet werden.

In an sich bekannter Weise können die Elastomerkörper nach Anspruch 8 für eine Vergleichmäßigung des Spannungsverlaufs mehrlagig ausgeführt sein und Zwischenbleche enthalten.

Zweckmäßig werden nach Anspruch 9 als Elastomerkörper und als Elastomeranschläge vulkanisierte Gummikörper verwendet.

Nach Anspruch 10 sind bei Bedarf und einem Lagereinsatz an besonders belastungskritischen Stellen an sich bekannte Sicherungsmaßnahmen zur Lagestabilisierung des Elastomermetallteils im Lagergehäuse einsetzbar. Diese Sicherungsmaßnahmen können wegen des reduzierten Verlagerungsverhaltens aber im Vergleich zum Stand der Technik regelmäßig einfacher und damit kostengünstiger ausgebildet sein.

Anhand einer Zeichnung wird die Erfindung näher erläutert.

Es zeigen:
- Fig. 1: ein Elastomermetallteil als Gummimetallteil im Herstellzustand in axialer Ansicht,
- Fig. 2: das Gummimetallteil nach Fig. 1 in einer Seitenansicht,
- Fig. 3: ein elastisches Lager mit in einem Lagergehäuse eingepressten Gummimetallteil bei betriebsmäßig, statischer Belastung,
- Fig. 4: eine Seitenansicht des komplett montierten Lagers nach Fig. 3,
- Fig. 5: ein Gummimetallteil nach dem Stand der Technik in Axialansicht,
- Fig. 6: das Gummimetallteil nach Fig. 5 in einer Seitenansicht,
- Fig. 7: ein komplett montiertes Lager nach dem Stand der Technik in axialer Ansicht, und
- Fig. 8: das Lager nach Fig. 7 mit Befestigungsvorrichtung in einer Seitenansicht.

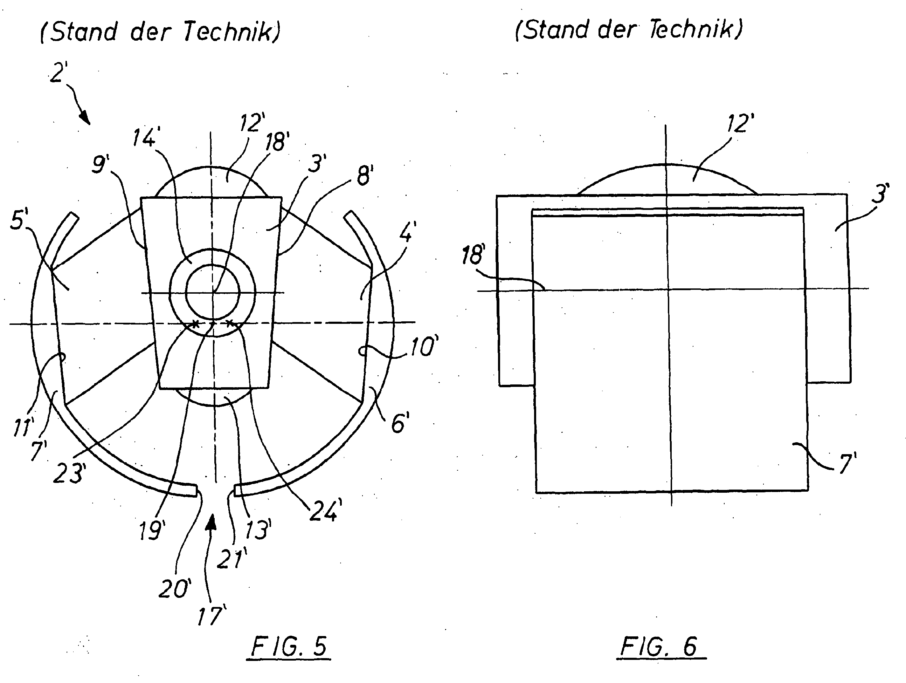

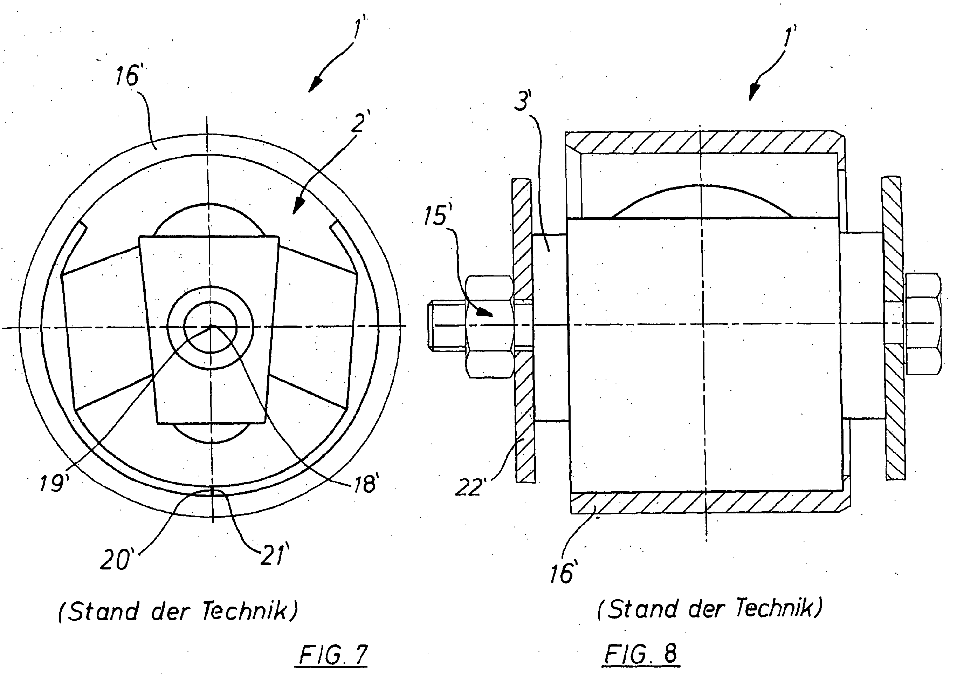

In den Fig. 5 bis 8 sind ein elastisches Lager 1' nach dem Stand der Technik sowie Bestandteile des Lagers 1' dargestellt. In Fig. 5 ist dazu ein Gummimetallteil 2' gezeigt, welches aus einem prismatischen inneren Metallteil 3' aus zwei einander gegenüberliegenden Elastomerkörpern 4', 5' und zwei Außenhalbschalen 6', 7' besteht. Die Elastomerkörper 4', 5' sind dachförmig angestellt und sowohl mit etwa vertikal verlaufenden Stützflächen 7', 8' des inneren Metallteils 3' sowie mit entsprechend zugeordneten Befestigungsflächen 10', 11' an den Innenseiten der Außenhalbschalen 6', 7' festhaftend verbunden. Auf der Ober- und Unterseite des inneren Metallteils 3' ist jeweils ein Elastomeranschlag 12', 13' festhaftend angebracht. Im Zentrum des inneren Metallteils 3' verläuft eine Längsbohrung, in die ein Kunststoffrohr 14' eingeschoben ist, in welches zur Realisierung einer Kippachse und für eine Befestigung im Endmontagezustand eine Befestigungsschraube 15' (siehe Fig. 8) eingesetzt ist.

Die Außenhalbschalen 6', 7' haben in der axialen Draufsicht nach Fig. 5 die Gestalt von Teilkreisen mit einem Radius entsprechend dem Radius des zylindrischen Lagergehäuses 16' (Fig. 7). Die Außenhalbschalen 6', 7' sind im Herstellzustand so angeordnet, dass sie im unteren Bereich durch einen Längsspalt 17' getrennt sind. Die Breite dieses Längsspalts 17' entspricht dem horizontalen Abstand der Mittelpunkte 23', 24' für die Kreisformen der Außenhalbschalen 6', 7' im nicht vorgespannten Zustand der Außenhalbschalen 6', 7'. Im oberen Lagerbereich sind die Außenhalbschalen 6', 7' weit geöffnet und liegen auch im eingepressten Zustand (Fig. 7) nicht aneinander. Im unbelasteten Herstellzustand des Gummimetallteils 2' liegt die Achse 18' des inneren Metallteils versetzt oberhalb der Lagerachse 19'.

In den Fig. 7 und 8 ist das Gummimetallteil 2 in das zylindrische Lagergehäuse 16' eingepresst, wodurch die Außenhalbschalen 6', 7' unter radialer Vorspannung zusammengeführt sind dergestalt, dass die Spaltränder 20', 21' des Längsspalts 17' so aneinander liegen, dass der Längsspalt 17' geschlossen ist und in den Außenschalenteilbereichen zwischen den Elastomerkörpern 4', 5' nach unten eine radial nach außen gerichtete Vorspannung aufgebaut ist. Das Lager 1' ist hier zudem bereits mit einer vorgegebenen statischen Belastung (beispielsweise mit der vertikalen Belastung durch ein nicht gezeigtes Fahrerhaus) dargestellt, so dass die Achse 18' des inneren Metallteils und die Lagerachse 19' zusammenfallen.

Aus Fig. 8 ist ersichtlich, dass das innere Metallteil 3' axial länger ist, als das Lagergehäuse 16' und zwischen zwei Platten 22' eingespannt ist.

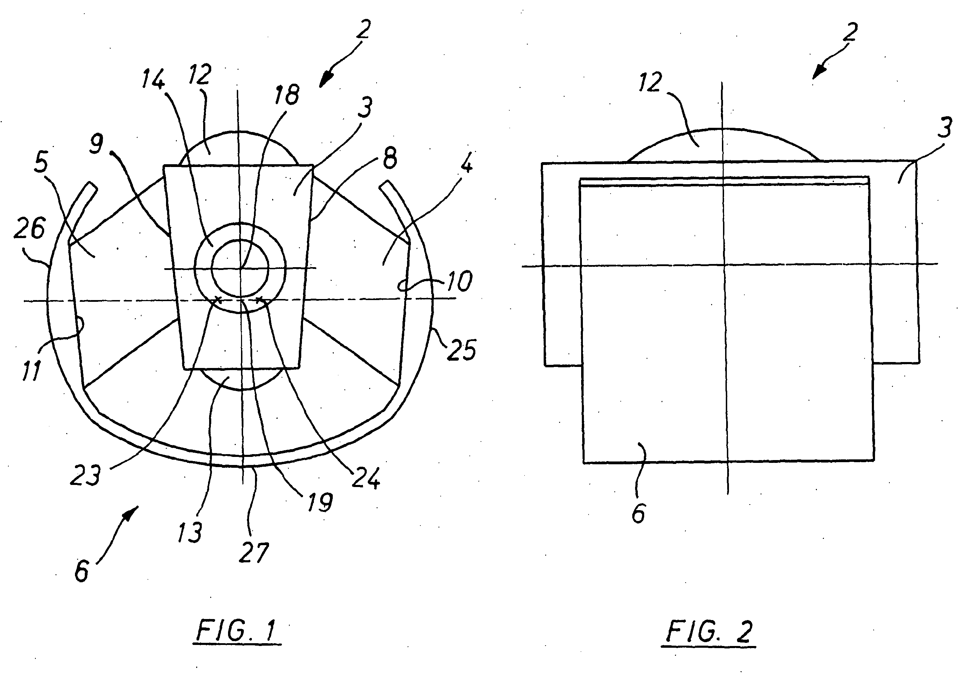

In den Fig. 1 bis 4 sind das erfindungsgemäße elastische Lager 1 und seine Bestandteile dargestellt. In den Fig. 1 und 2 ist ein Gummimetallteil 2 gezeigt, mit einem prismatischen inneren Metallteil 3 und einer Außenschale 6, wobei dazwischen zwei gegenüberliegende Elastomerkörper 4, 5 festhaftend und dachförmig angestellt angeordnet sind. Am inneren Metallteil 3 sind oben und unten Elastomeranschläge 12, 13 angebracht. Der Aufbau des inneren Metallteils 3, der Elastomerkörper 4, 5 und der Elastomeranschläge 12, 13 ist entsprechend der Ausführung nach dem Stand der Technik nach den Fig. 5 und 6 ausgeführt, so dass dafür die entsprechenden Bezugszeichen (ohne') verwendet sind und zur Vermeidung von Wiederholungen auf die Ausführungen zum Stand der Technik Bezug genommen wird.

Die Außenschalenkonturen 25, 26 im Bereich der Elastomerkörper 4, 5 sind in der Draufsicht nach Fig. 1 (ebenso wie in der Ausführung nach dem Stand der Technik) kreisbogenförmig ausgeführt, wobei im nicht vorgespannten Zustand die dazugehörigen Kreismittelpunkte 23, 24 beabstandet sind. Der Außenschalenbereich 27 zwischen den Elastomerkörpern 4, 5 weist gegenüber diesen kreisförmigen Außenschalenkonturen 25, 26 und entsprechend gegenüber der Innenwölbung des zugeordneten Anlagebereichs des Lagergehäuses 16 aber eine flachere Auswölbung auf.

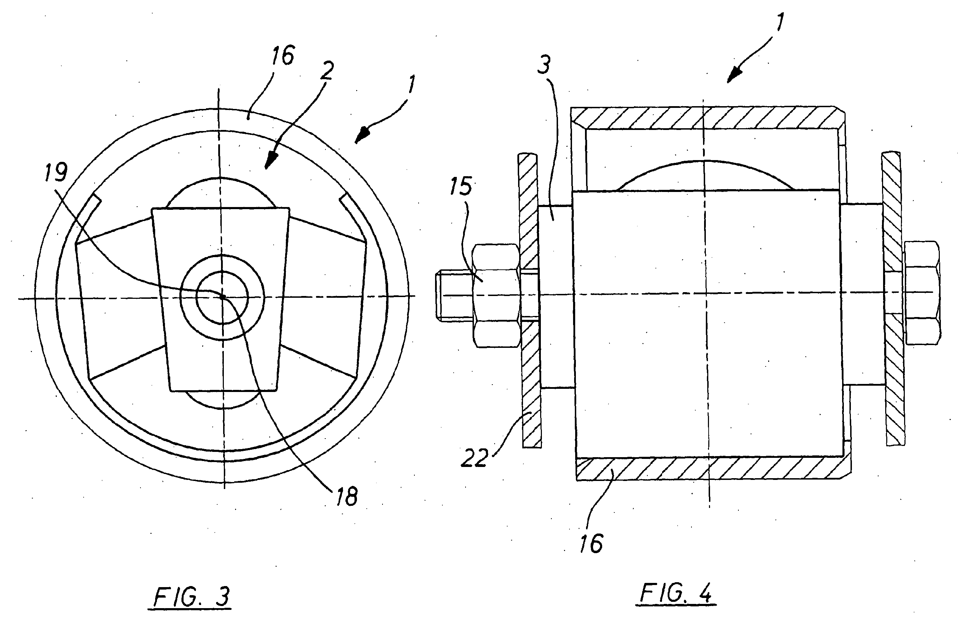

In den Fig. 3 und 4 ist der fertige betriebsmäßige Zustand des elastischen Lagers 1 dargestellt, wobei das Gummimetallteil 2 in das zylindrische Lagergehäuse 16 unter radialer Vorspannung eingepresst ist. Zudem ist hier bereits die statische vertikale Last, z. B. eines Fahrerhauses aufgebracht, so dass die Achse 18 des inneren Metallteils 3 und die gesamte Lagerachse 19 zusammenfallen. Ersichtlich sind zudem durch den Einpressvorgang die kreisförmigen Außenschalenkonturen 25, 26 unter Vorspannung so gegeneinander geführt, dass die Kreismittelpunkte 23, 24 ebenfalls zu einem Kreismittelpunkt entsprechend dem Gehäusemittelpunkt zusammengeführt sind. Weiter ist der Außenschalenbereich 27 dadurch ausgehend von der flacheren Auswölbung zu einer Kreisform weiter ausgewölbt und liegt unter radialer Vorspannung an der Zylinderinnenfläche des Lagergehäuses 16 an. Im Gegensatz zur Ausführung nach dem Stand der Technik (Fig. 7) liegen somit hier keine Spaltränder 20, 21 aneinander, welche bei unterschiedlichen Lagerbelastungsrichtungen durch Abstützbewegungen Wanderbewegungen des gesamten inneren Gummimetallteils bezüglich des Lagergehäuses hervorrufen können.

## Patentansprüche

1. Elastisches Lager bestehend aus einem Elastomermetallteil (2) mit einem inneren Metallteil (3) und aus einem rohrförmigen Lagergehäuse (16), dergestalt, dass das innere Metallteil (3) und das Lagergehäuse (16) der Krafteinleitung und Kraftausleitung dienen, wobei das Elastomermetallteil (2) weiter eine Außenschale (6) aufweist und zwischen der Außenschale (6) und dem inneren Metallteil (3) Elastomerkörper (4, 5) festhaftend angeordnet sind, und wobei der Außendurchmesser des Elastomermetallteils (2) im Herstellzustand zumindest in Teilbereichen größer ist als der Innendurchmesser des Lagergehäuses (16) und somit das Elastomermetallteil (2) im fertig montierten Montagezustand unter radialer Vorspannung in das Lagergehäuse (16) eingepresst ist,
wobei wenigstens ein Außenschalenteilbereich (27) zwischen den Elastomerkörpern (4, 5) durchgehend geschlossen ausgebildet ist,
**dadurch gekennzeichnet,**
**dass** dieser Außenschalenteilbereich (27) im Herstellzustand des Elastomermetallteils (2) mit flacherer Auswölbung ausgebildet ist im Vergleich zur Innenwölbung des zugeordneten Lagergehäuseteilbereichs (16) dergestalt,
**dass** im Montagezustand bei aufgebrachter Vorspannung die Anbindungsstellen des Außenschalenteilbereichs (27) an den Elastomerkörpern (4, 5) relativ aufeinander zu verlagert sind und damit der Außenschalenteilbereich (27) im Vergleich zum Herstellzustand weiter ausgewölbt ist und unter Vorspannung angepasst an die Innenwölbung am zugeordneten Lagergehäuseteilbereich (16) anliegt.

2. Elastisches Lager nach Anspruch 1, **dadurch gekennzeichnet, dass** ein Außenschalenteilbereich (27) zwischen den gegenüberliegenden Elastomerkörpern durchgehend geschlossen ist und der gegenüberliegende Außenschalenteilbereich auch im eingepressten Montagezustand weit offen ist.

3. Elastisches Lager nach Anspruch 1 oder 2, **dadurch gekennzeichnet, dass** im Einbauzustand die Lagerachse (19) etwa horizontal liegt, wobei die Elastomerkörper (4, 5) etwa in einer Horizontalebene gegenüberliegen und an etwa vertikal ausgerichteten Stützflächen (8, 9) des inneren Metallteils (3) angehaftet sind und sich dort abstützen dergestalt, dass im statisch belasteten Zustand die Längsmitte (18) des inneren Metallteils (3) etwa im Bereich der Lagerachse (19) liegt.

4. Elastisches Lager nach Anspruch 1 oder 3, **dadurch gekennzeichnet, dass** das innere Metallteil (3) prismatisch ausgeführt ist und eine lagerachsparallele Bohrung aufweist zur Aufnahme einer Befestigungsschraube (15) und/oder eines Lagerrohrs (14) und/oder eines Achsbolzens.

5. Elastisches Lager nach einem der Ansprüche 1 bis 4, **dadurch gekennzeichnet, dass** das Lagergehäuse (16) zylindrisch ist und die Außenschalenform (25, 26) im Bereich der Elastomerkörper (4, 5) entsprechend einem Zylinderabschnitt ausgebildet ist.

6. Elastisches Lager nach einem der Ansprüche 1 bis 5, **dadurch gekennzeichnet, dass** am inneren Metallteil (3) versetzt zu den Elastomerkörpern wenigstens ein radial wirkender Elastomeranschlag (12, 13) festhaftend angeordnet ist.

7. Elastisches Lager nach einem der Ansprüche 1 bis 6, **dadurch gekennzeichnet, dass** die Außenschale (6) aus einem Metallblech hergestellt ist.

8. Elastisches Lager nach einem der Ansprüche 1 bis 7, **dadurch gekennzeichnet, dass** die Elastomerkörper (4, 5) mehrlagig ausgeführt sind und wenigstens ein Zwischenblech enthalten.

9. Elastisches Lager nach einem der Ansprüche 1 bis 8, **dadurch gekennzeichnet, dass** die Elastomerkörper (4, 5) vulkanisierte Gummikörper sind.

10. Elastisches Lager nach einem der Ansprüche 1 bis 9, **dadurch gekennzeichnet, dass** das eingepresste Elastomermetallteil (2) im Lagergehäuse (16) mittels am stirnseitigen Rand der Außenschale (6) angebrachter Überstände und/oder Flansche durch Schrauben und/oder Umbördeln axial fixiert ist.

## Claims

1. Elastic bearing comprising an elastomer metal part (2) having an inner metal part (3), and comprising a tubular bearing housing (16), of such a type that the inner metal part (3) and the bearing housing (16) serve for the input and output of force, the elastomer metal part (2), furthermore, having an outer shell (6), and elastomer bodies (4, 5) being arranged in a fixedly adhering manner between the outer shell (6) and the inner metal part (3), and the external diameter of the elastomer metal part (2) being greater in the manufacturing state at least in part regions than the internal diameter of the bearing housing (16), and the elastomer metal part (2) therefore being pressed with radial prestress into the bearing housing (16) in the final assembly state, at least one outer shell part region (27) between the elastomer bodies (4, 5) being of continuously closed configuration, **characterized in that** the said outer shell part region (27) is configured with a flatter curvature in the manufacturing state of the elastomer metal part (2) than the inner curvature of the associated bearing housing part region (16), in such a way that the connecting points of the outer shell part region (27) are displaced relatively on the elastomer bodies (4, 5) towards one another in the assembly state if prestress is applied, and the outer shell part region (27) is therefore curved to a greater extent than the manufacturing state and bears against the inner curvature on the associated bearing housing part region (16) in an adapted manner under prestress.

2. Elastic bearing according to Claim 1, **characterized in that** an outer shell part region (27) is closed continuously between the elastomer bodies which lie opposite one another, and the outer shell part region which lies opposite is wide open, even in the pressed-in assembly state.

3. Elastic bearing according to Claim 1 or 2, **characterized in that** the bearing axis (19) lies approximately horizontally in the installed state, the elastomer bodies (4, 5) lying opposite approximately in a horizontal plane, adhering to approximately vertically oriented supporting faces (8, 9) of the inner metal part (3) and being supported there in such a way that the longitudinal centre (18) of the inner metal part (3) lies approximately in the region of the bearing axis (19) in the statically loaded state.

4. Elastic bearing according to Claim 1 or 3, **characterized in that** the inner metal part (3) is of prismatic configuration and has a bore which is parallel to the bearing axis, for receiving a fastening screw (15) and/or a bearing tube (14) and/or an axle pin.

5. Elastic bearing according to one of Claims 1 to 4, **characterized in that** the bearing housing (16) is cylindrical and the outer shell shape (25, 26), in the region of the elastomer bodies (4, 5), is configured in accordance with a cylinder section.

6. Elastic bearing according to one of Claims 1 to 5, **characterized in that** at least one radially acting elastomer stop (12, 13) is arranged in a fixedly adhering manner on the inner metal part (3), offset with respect to the elastomer bodies.

7. Elastic bearing according to one of Claims 1 to 6, **characterized in that** the outer shell (6) is manufactured from a metal sheet.

8. Elastic bearing according to one of Claims 1 to 7, **characterized in that** the elastomer bodies (4, 5) are configured in multiple layers and contain at least one intermediate metal sheet.

9. Elastic bearing according to one of Claims 1 to 8, **characterized in that** the elastomer bodies (4, 5) are vulcanized rubber bodies.

10. Elastic bearing according to one of Claims 1 to 9, **characterized in that** the pressed-in elastomer metal part (2) is fixed axially in the bearing housing (16) by means of flanges and/or projections, which are made on the end-side edge of the outer shell (6), by screwing and/or flanging.

## Revendications

1. Support élastique constitué d'une partie en élastomère-métal (2) avec une partie métallique interne (3) et d'un boîtier de support (16) de forme cylindrique, de sorte que la partie métallique interne (3) et le boîtier de support (16) servent à l'application d'une force ou au relâchement d'une force, dans lequel la partie en élastomère-métal (2) présente de plus une enveloppe externe (6) et entre l'enveloppe externe (6) et la partie métallique interne (3) des corps en élastomère (4, 5) sont solidement disposés, et dans lequel le diamètre externe de la partie en élastomère-métal (2) à l'état fabriqué est au moins par endroits plus grand que le diamètre interne du boîtier de support (16) et de ce fait la partie en élastomère-métal (2) à l'état monté une fois le montage terminé est comprimée par une précontrainte radiale dans le boîtier de support (16),
dans lequel au moins un secteur de l'enveloppe externe (27) entre les corps en élastomère (4, 5) étant conçu entièrement fermé,
**caractérisé en ce que**,
ce secteur de l'enveloppe externe (27) de la partie en élastomère-métal (2) à l'état fabriqué est conçu avec une courbure externe plus plate par rapport à la courbure interne du secteur de boîtier de support (16) correspondant, de sorte que
à l'état monté les emplacements de contact du secteur de l'enveloppe externe (27) avec les corps en élastomère (4, 5) sont amenés à se déplacer l'un relativement à l'autre du fait de la précontrainte appliquée et pour que le secteur de l'enveloppe externe (27) continue à se courber par rapport à l'état fabriqué et, ajusté par précontrainte, soit adjacent à la courbure interne du secteur du boîtier de support (16) correspondant.

2. Support élastique selon la revendication 1, **caractérisé en ce qu'**un secteur de l'enveloppe externe (27) entre les corps en élastomère situés à l'opposé l'un de l'autre est entièrement fermé et le secteur de l'enveloppe externe situé à l'opposé est grand ouvert également lors de la compression à l'état monté.

3. Support élastique selon la revendication 1 ou 2, **caractérisé en ce qu'**à l'état installé l'axe du support (19) est dans une position à peu près horizontale, dans lequel les corps en élastomère (4, 5) se font face dans un plan à peu près horizontal et adhèrent à des surfaces d'appui (8, 9) de la partie métallique interne (3) alignées à peu près verticales et s'y appuient, de sorte que dans un état de mise en charge statique la longueur médiane (18) de la partie métallique interne (3) est positionnée à peu près à proximité de l'axe du support (19).

4. Support élastique selon la revendication 1 ou 3, **caractérisé en ce que** la partie métallique interne (3) est extraite de manière prismatique ouvrant un trou parallèle à l'axe du support destiné à recevoir une vis de fixation (15) et/ou un tube de support (14) et/ou un axe boulonné.

5. Support élastique selon l'une quelconque des revendications 1 à 4, **caractérisé en ce que** le boîtier de support (16) est cylindrique et la forme de l'enveloppe externe (25, 26) à proximité des corps en élastomère (4, 5) est conçue pour correspondre à un tronçon de cylindre.

6. Support élastique selon l'une quelconque des revendications 1 à 5, **caractérisé en ce qu'**au moins une butée en élastomère (12, 13) agissant radialement déplacée au niveau des corps en élastomère est solidement disposée contre la partie métallique interne (3) .

7. Support élastique selon l'une quelconque des revendications 1 à 6, **caractérisé en ce que** l'enveloppe externe (6) est fabriquée à partir d'une tôle métallique.

8. Support élastique selon l'une quelconque des revendications 1 à 7, **caractérisé en ce que** les corps en élastomère (4, 5) sont constitués de plusieurs couches et contiennent au moins une tôle insérée.

9. Support élastique selon l'une quelconque des revendications 1 à 8, **caractérisé en ce que** les corps en élastomère (4, 5) sont des corps en caoutchouc vulcanisé.

10. Support élastique selon l'une quelconque des revendications 1 à 9, **caractérisé en ce que** la partie en élastomère-métal (2) comprimée est fixée axialement dans le boîtier de support (16) par des vis et/ou des rabattements au moyen de saillies et/ou de rebords appliqués sur le bord frontal de l'enveloppe externe (6).
